# EUROPÄISCHE PATENTANMELDUNG

(11) **EP 1 304 670 A1**
(43) Veröffentlichungstag der Anmeldung: **23.04.2003**
(21) Anmeldenummer: 01118545.1
(22) Anmeldetag: 01.08.2001
(51) Int. Cl.: G07F 19/00, G07B 15/02

(54) **Verfahren zum elektronischen Bezahlen der Nutzung eines Transportmittels, zugehörige Kontrollverfahren und zugehörige Einheiten**

(71) Anmelder: SIEMENS AKTIENGESELLSCHAFT, 80333 München (DE)
(72) Erfinder: Gundlach, Michael, Dr., 81739 München (DE)

(57) **Zusammenfassung**

Erläutert wird unter anderem ein Verfahren, bei dem ein Handy (14) eine Mobilfunkschnittstelle (28), eine lokale Schnittstelle (32) und eine Speicherkarte (22) enthält. Über die lokale Schnittstelle werden Nutzungsdaten übertragen, welche die geplante Nutzung eines Verkehrsmittels durch den Nutzer des Handys (14) angeben. Außerdem wird unter Einbeziehung des Handys ein elektronisches Bezahlverfahren ausgeführt.

## Beschreibung

Die Erfindung betrifft ein Verfahren, bei dem ein Endgerät eines Mobilfunk-Datenübertragungsnetzes, im Folgenden kurz Mobilfunknetz genannt, gemeinsam mit dem Nutzer des Endgerätes in einem Personen-Transportmittel befördert wird.

Dem Endgerät, das auch als Handy bezeichnet wird, ist eine Rufnummer zugeordnet, unter der es für andere Endgeräte im Mobilfunknetz erreichbar ist. Das Endgerät enthält eine Mobilfunkschnittstelle und eine Speicherkarte, in der die Rufnummer des Endgerätes gespeichert ist. Die Speicherkarte wird auch als Chipkarte bzw. SIM-Karte (Subscriber Identity Module) bezeichnet. Das Transportmittel ist ein Flugzeug, ein Schiff oder ein Fahrzeug, z.B. ein Bus, oder ein Schienenfahrzeug, wie z.B. eine U-Bahn, eine S-Bahn oder eine Straßenbahn.

Ein bekanntes Verfahren zum elektronischen Bezahlen der Nutzung eines Transportmittels ist aus dem Internet bekannt, vgl. die Web-Seite mit der Adresse http://www.ic.siemens.com/mobile/payment/payment scenarios/ticketing.html. Bei dem von der SIEMENS AG, Bereich Information and Communication, entwickelten Verfahren "Mobile Ticketing" ist zum Erwerb einer Fahrkarte die Rufnummer des Transportunternehmens über das Mobilfunknetz anzuwählen. Über Auswahlmenüs lässt sich dann eine bestimmte Fahrkarte auswählen. Sobald die Anfrage bestätigt wird, z.B. nach dem Ausführen eines Bezahlvorganges, wird die elektronische Fahrkarte als SMS gemeinsam mit dem Datum, der Uhrzeit, einem Datum über die Art des Tickets und einer Codenummer zum Endgerät des Fahrgastes gesendet. Bei einer Fahrkartenkontrolle ist dem Kontrolleur lediglich die SMS auf der Anzeigeeinheit des Endgerätes anzuzeigen.

Für das Bezahlen werden eine Reihe von verschiedenen Bezahlverfahren angeboten, z.B. das Bezahlen über die Telefonrechnung oder über ein Verfahren mit Vorauszahlung. Lösungen für elektronische Bezahlverfahren werden ebenfalls von der SIEMENS AG, Bereich Information and Communication, angeboten.

Das bekannte Verfahren "Mobile Ticketing" ist insbesondere auch für Fahrgäste geeignet, die nicht über die lokale Währung verfügen. Außerdem entfällt das Ausdrucken von Fahrkarten.

Es ist Aufgabe der Erfindung, ein weiteres Verfahren zum elektronischen Bezahlen der Nutzung eines Transportmittels anzugeben, das insbesondere einfach und benutzerfreundlich ist. Außerdem sollen zugehörige sichere Kontrollverfahren und zugehörige Einheiten angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass Verfahren zum elektronischen Bezahlen der Nutzung eines Transportmittels mit Hilfe eines Handys zwar eine Reihe von Vorteilen bringen, die Fahrkarte aber durch die Nutzung des Mobilfunknetzes unnötig verteuert wird. Andererseits besitzen die Handies schon seit langem Schnittstellen für eine lokale Datenübertragung, z.B. über ein Verbindungskabel zu einem anderen Rechner. Lokale Datenübertragung bedeutet, dass die Daten nur über eine im Vergleich zur Länge der Mobilfunkstrecke kurze Strecke gemäß dem für die lokale Schnittstelle vorgesehenen Protokoll übertragen werden. Die Leistungsfähigkeit der lokalen Schnittstelle und die Anzahl der mit gleichen lokalen Schnittstellen ausgerüsteten Handies steigt dabei von Jahr zu Jahr. Die Datenübertragung über die lokale Schnittstelle ist anders als die Datenübertragung über die Mobilfunkschnittstelle nicht zu vergebühren. Deshalb wird beim erfindungsgemäßen Verfahren die lokale Schnittstelle in das Bezahlverfahren einbezogen.

Beim erfindungsgemäßen Verfahren wird zwischen dem Endgerät und einem Diensterbringungsrechner über die lokale Schnittstelle eine Nahdatenübertragungsverbindung aufgebaut. Über die Nahdatenübertragungsverbindung werden vom Endgerät zum Diensterbringungsrechner Nutzungsdaten, z.B. Fahrtdaten oder Flugdaten, übertragen, welche die geplante Nutzung des Transportmittels durch den Nutzer des Endgerätes angeben. Das elektronische Bezahlverfahren wird ebenfalls unter Nutzung der lokalen Schnittstelle ausgeführt.

Durch das erfindungsgemäße Verfahren wird erreicht, dass alle zum Lösen der Fahrkarte erforderlichen Daten über die lokale Schnittstelle übertragen werden, deren Nutzung im Gegensatz zu einem Datenübertragungsnetz nicht an einen Netzbetreiber vergebührt werden muss. Das Nutzen der lokalen Schnittstelle ermöglicht außerdem das elektronische Bezahlen auch bei einer Störung oder Überlastung des Mobilfunknetzes sowie bei schlechten Empfangs- bzw. Sendebedingungen, wie sie in der Nähe von Bahnhöfen und insbesondere in unterirdischen U-Bahnhöfen oft angetroffen werden.

Der Fahrgast braucht außer seinem Handy kein zusätzliches Gerät zum Fahrkartenkauf. Das Handy trägt er aber ohnehin bei sich. Die eigentliche Hauptfunktion des Handys, d.h. das ermöglichen des Zugangs zu einem Mobilfunknetzes, wird zwar beim erfindungsgemäßen Verfahren nicht genutzt, jedoch werden viele Baueinheiten des Handys, die Funktionen für das Nutzen des Mobilfunknetzes erbringen, auch für das Lösen der Fahrkarte genutzt, z.B. die Stromversorgung, die Anzeigeeinheit, eine Speichereinheit und ein Prozessor.

Bei einer Weiterbildung des erfindungsgemäßen Verfahrens wird die Rufnummer des Endgerätes über die Nahdatenübertragungsverbindung zum Diensterbringungsrechner übertragen und in einer zentralen Speichereinheit gemeinsam mit den Nutzungsdaten gespeichert.

Zur Kontrolle der tatsächlichen Nutzung des Transportmittels durch den Nutzer des Endgerätes wird bei einer anderen Weiterbildung eine Kontrolldatenübertragungsverbindung zwischen einem Kontrollgerät, das von einer Kontrollperson bedient wird, und dem Endgerät über die lokale Schnittstelle aufgebaut. Die Rufnummer des Endgerätes wird über die Kontrolldatenübertragungsverbindung zum Kontrollgerät übertragen. Außerdem wird eine Ferndatenübertragungsverbindung zwischen dem Kontrollgerät und der zentralen Speichereinheit aufgebaut. Die Rufnummer des Endgerätes wird über die Ferndatenübertragungsverbindung zu einem Diensterbringungsrechner übermittelt, der Zugriff auf die zentrale Speichereinheit hat. Im Diensterbringungsrechner werden die zur Rufnummer gespeicherten Nutzdaten gelesen. An Hand der gelesenen Nutzungsdaten wird die tatsächliche Nutzung des Transportmittels im Diensterbringungsrechner oder im Kontrollgerät überprüft. Die Nutzungsdaten müssen bei dieser Weiterbildung also nicht im Endgerät gespeichert werden. Jedoch ist eine Speicherung als Beleg für den Fahrgast zweckmäßig. Durch die Speicherung der Daten ausschließlich in der zentralen Speichereinheit bzw. an zwei verschiedenen Stellen, sind unberechtigte Veränderungen der Daten erschwert und können leicht aufgedeckt werden. Bei der Weiterbildung wird die Rufnummer des Endgerätes auf einfache Art und Weise vom Endgerät zum Kontrollgerät übertragen, ohne dass eine zu vergebührende Datenübertragungsverbindung über das Mobilfunknetz aufgebaut werden muss. Eine manuelle Übertragung der Rufnummer wäre sehr umständlich und außerdem sehr fehleranfällig gegen Zahlendreher und Tippfehler.

Bei einer alternativen Weiterbildung des erfindungsgemäßen Verfahrens werden über die Nahdatenübertragungsverbindung vom Diensterbringungsrechner zum Endgerät Nachweisdaten übertragen, die einen Nachweis über das elektronische Bezahlverfahren enthalten. Die Nachweisdaten werden in der Speicherkarte des Endgerätes gespeichert. Die Nachweisdaten dienen als Quittung für den Bezahlvorgang und lassen sich außerdem bei der Kontrolle der tatsächlichen Nutzung des Transportmittels nutzen.

So wird bei einer anderen Weiterbildung eine Kontrolldatenübertragungsverbindung zwischen dem Endgerät und einem Kontrollgerät, das von einer Kontrollperson bedient wird, über die lokale Schnittstelle aufgebaut. Die Nachweisdaten werden dann vom Endgerät zum Kontrollgerät über die lokale Schnittstelle übertragen. An Hand der Nachweisdaten wird dann die Übereinstimmung oder die Abweichung von geplanter Nutzung und tatsächlicher Nutzung des Transportmittels im Kontrollgerät geprüft. Das Kontrollverfahren lässt sich unter Einbeziehung der Rufnummer des Endgerätes aber auch rufnummernunabhängig durchführen.

Bei einer Weiterbildung enthalten die Nachweisdaten die Nutzungsdaten. Jedoch wird auch eine Prüfzahl aus den Nutzungsdaten nach einem vom Betreiber des Transportmittels geheimgehaltenen Verfahren berechnet und zusätzlich zu den Nutzungsdaten oder an Stelle der Nutzungsdaten als Nachweisdatum verwendet.

Bei einer nächsten Weiterbildung des erfindungsgemäßen Verfahrens geben die Nutzungsdaten einen Einstiegsort, einen Ausstiegsort sowie den Zeitpunkt der Durchführung des Bezahlverfahrens an. Bei einer Alternative enthalten die Nutzungsdaten neben dem Einstiegsort eine Anzahl von Tarifzonen, deren Nutzung geplant ist, sowie den Zeitpunkt, zu dem das Bezahlverfahren durchgeführt worden ist. Jedoch lassen sich auch andere Nutzungsdaten einsetzen, bspw. wenn Verfahren mit einer nachträglichen Entwertung eingesetzt werden.

Bei einer anderen Weiterbildung des erfindungsgemäßen Verfahrens werden die Nutzungsdaten und/oder die Nachweisdaten verschlüsselt und/oder vom jeweiligen Sender signiert übertragen. Eingesetzt werden insbesondere asymmetrische Verschlüsselungsverfahren, bei denen öffentliche digitale Schlüssel und private digitale Schlüssel eingesetzt werden. Die Verschlüsselungs- und Unterschriftsverfahren sind bei einer Ausgestaltung standardisierte Verfahren, z.B. gemäß Standard X.509 der ITU-T (International Telecommunication Union - Telecommunication Sector). Durch das Verschlüsseln und/oder das Signieren werden Fälschungen der Nutzungsdaten bzw. der Nachweisdaten erschwert.

Bei einer Weiterbildung des erfindungsgemäßen Verfahrens ist die lokale Schnittstelle eine Schnittstelle kurzer Datenübertragungsreichweite. Die Reichweite beträgt beispielsweise nur etwa eine Meter oder nur wenige Meter und liegt vorzugsweise bei etwa 10 m. Bei einer Ausgestaltung ist die lokale Schnittstelle eine Funkschnittstelle, insbesondere eine gemäß Bluetooth-Standard arbeitende Schnittstelle. Der Bluetooth-Standard entstand auf Initiative der Firmen Nokia; Ericsson; IBM Intel und Toshiba. Später akzeptierten weit über 200 Firmen diesen Standard. Durch den Einsatz einer lokalen Schnittstelle, die gemäß Bluetooth-Standard arbeitet, ist sichergestellt, dass eine Schnittstelle eingesetzt wird, die bei Handies weit verbreitet ist bzw. die bei Handies in Zukunft weit verbreitet sein wird.

Alternativ ist die lokale Schnittstelle eine optisch arbeitende Schnittstelle, beispielsweise im Infrarotbereich. Im Funkbereich bzw. im optischen Bereich arbeitende Schnittstellen benötigen zur Übertragung der Daten keine Kabel, so dass die damit verbundenen Handgriffe und logistischen Probleme entfallen.

Bei einer anderen Weiterbildung des erfindungsgemäßen Verfahrens wird die Datenübertragungsverbindung nach dem manuellen Eingeben eines Startsignals automatisch aufgebaut. Zusätzlich oder alternativ lassen sich die Daten nach der Eingabe eines manuellen Startsignals automatisch übertragen. Insbesondere wenn im Endgerät Vorbelegungen mit Standarddaten gespeichert sind, beschränken sich die Handlungen des Nutzers beim Kauf eines Tickets auf einen Knopfdruck oder auf die Auswahl nur eines Menüpunktes.

Bei einer nächsten Weiterbildung des erfindungsgemäßen Verfahrens wird als Bezahlverfahren ein elektronisches Bezahlverfahren mit Vorauszahlung oder ein Verfahren mit Kreditzahlung eingesetzt. Beide Verfahren haben sich bereits weit verbreitet und sind deshalb akzeptiert. Das Verfahren mit Vorauszahlung wird auch als Prepaid-Verfahren bezeichnet. Alternativ wird ein Verfahren eingesetzt, bei dem ein auf der Speicherkarte des Endgerätes gespeicherter Geldbetrag verringert wird. Insbesondere bei geringen Ticketpreisen von nur wenigen DM ist das Verwenden des Bezahlverfahrens mit Zugriff auf die Speicherkarte sehr gut geeignet. Eine Verbindung über das Mobilfunknetz wird erst dann aufgebaut, wenn nach mehreren Fahrten ein größerer Geldbetrag, z.B. ein Betrag von 100 DM, ausgegeben worden ist.

Bei einer nächsten Weiterbildung des erfindungsgemäßen Verfahrens werden abhängig von einem Auswahldatum die Nutzungsdaten wahlweise über die lokale Schnittstelle oder über die Mobilfunkschnittstelle zum Diensterbringungsrechner übertragen. Der Fahrgast kann so die Vorteile verschiedener Verfahren nutzen und die Nachteile eines Verfahren durch die Nutzung des anderen Verfahrens vermeiden. Insbesondere entsteht eine Redundanz, die es auch bei Ausfall oder Nichterreichbarkeit des Mobilfunknetzes bzw. bei Ausfall eines lokalen Diensterbringungsrechners, der als Fahrkartenautomat eingesetzt wird, dennoch ermöglicht, ein Ticket zu erwerben. Der Fahrgast kann bei der Weiterbildung außerdem den Zeitpunkt wählen, zu dem er das Ticket lösen möchte. Nur wenn er sich für das Verfahren unter Benutzung der lokalen Schnittstelle entscheidet, muss er das Ticket lösen, wenn er sich in der Nähe einer Empfangseinheit befindet, die mit der lokalen Schnittstelle zusammenarbeitet. Der Fahrgast kann außerdem abwägen, ob er bei Nutzung des flächendeckenden Mobilfunknetzes die zusätzliche Verbindungsgebühr zahlt oder ob er lieber die lokale Schnittstelle nutzt, um die Fahrkarte ohne Nebenkosten zu erwerben.

Die Erfindung betrifft außerdem ein Endgerät, ein Kontrollgerät und einen Diensterbringungsrechner, die bei der Durchführung des erfindungsgemäßen Verfahrens eingesetzt werden. Die oben genannten technischen Wirkungen gelten auch für diese Einheiten.

Im Folgenden werden Ausführungsbeispiele der Erfindung an Hand der beiliegenden Zeichnungen erläutert. Darin zeigen:
- Figur 1: einen Fahrkartenrechner mit einer Bluetooth-Standard-Schnittstelle,
- Figur 2: Verfahrensschritte beim Lösen einer Fahrkarte,
- Figur 3: Verfahrensschritte beim Kontrollieren der Fahrkarte ohne Einbeziehung eines Mobilfunknetzes, und
- Figur 4: Verfahrensschritte beim Kontrollieren der Fahrkarte unter Einbeziehung eines Mobilfunknetzes.

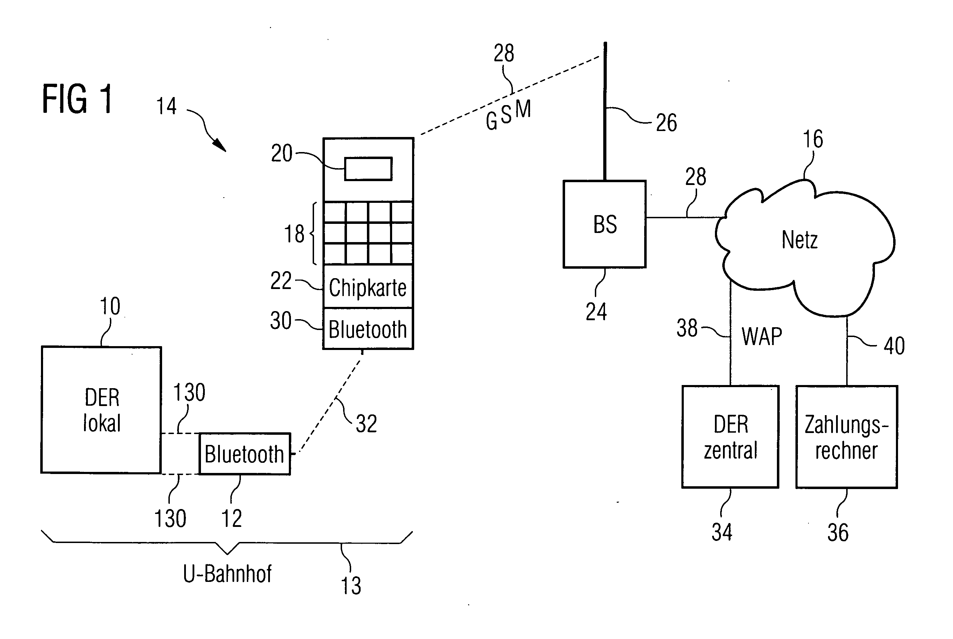

Figur 1 zeigt einen Fahrkartenrechner 10, der mit einer Bluetooth-Schnittstelle 12 ausgestattet bzw. über ein lokales Datenübertragungsnetz verbunden ist. Der Fahrkartenrechner 10 befindet sich in einem U-Bahnhof, der gegebenenfalls mehrere Meter unter der Erdoberfläche liegt. Wenige Meter von der Bluetooth-Schnittstelle 12 entfernt, siehe Klammer 13, befindet sich ein Handy 14 eines Fahrgastes. Das Handy 14 ist für den Betrieb in einem Mobilfunknetz 16 ausgestattet, d.h. es enthält eine Tastatur 18 zum Eingeben von Rufnummern und auch von Buchstaben, eine Anzeigeeinheit 20 zum Anzeigen eines Benutzermenüs sowie eine Chipkarte 22, auf der u.a. die Rufnummer R1 des Handys 14 gespeichert ist.

In Figur 1 ist eine Basisstation 24 des Mobilfunknetzes 16 dargestellt. Die Basisstation 24 hat eine Antenne 26 und ist über eine Leitung 28 mit dem Mobilfunknetz 16 verbunden. Über eine Mobilfunkschnittstelle 28 ist das Handy 14 für andere Endgeräte des Mobilfunknetzes 16 oder eines Festnetzes erreichbar bzw. kann das Handy 14 die anderen Endgeräte erreichen. Die Daten werden über die Mobilfunkschnittstelle 28 gemäß GSM-Standard (Global System for Mobile Communication) übertragen. In dem U-Bahnhof ist jedoch ggf. keine Übertragung von Daten über die Mobilfunkschnittstelle 28 möglich, weil die Mobilfunkschnittstelle 28 aufgrund der schlechten Übertragungsbedingungen zwischen Handy 14 und Antenne 26 gestört ist.

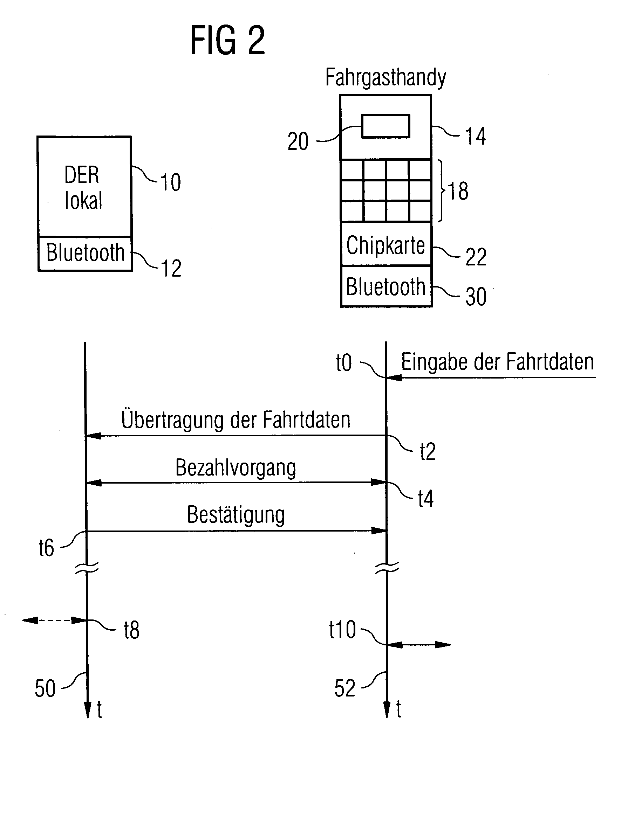

Das Handy 14 enthält außerdem auch eine Bluetooth-Schnittstelle 30, mit deren Hilfe eine lokale Datenübertragungsverbindung zwischen dem Handy 14 und dem Fahrkartenrechner 10 aufgebaut werden kann. Die über die lokale Datenübertragungsverbindung 32 ausgetauschten Daten werden unten an Hand der Figur 2 näher erläutert.

In Figur 1 sind außerdem ein zentraler Diensterbringungsrechner (DER) 34 und ein Zahlungsrechner 36 dargestellt, die über eine Datenübertragungsleitung 38 bzw. 40 mit dem Mobilfunknetz 16 verbunden sind. Der zentrale Diensterbringungsrechner 34 gehört dem Betreiber der U-Bahn und übernimmt zentrale Funktionen beim Verkauf bzw. Lösen von Fahrkarten. Die Daten werden beispielsweise gemäß Protokoll INAP (Intelligent Network Application Protocol) vom Diensterbringungsrechner 34 bzw. zum Diensterbringungsrechner 34 übertragen. Der Zahlungsrechner 36 wird bei der Durchführung üblicher elektronischer Bezahlverfahren eingesetzt, beispielsweise beim Ausführen eines Prepaid-Verfahrens.

Figur 2 zeigt Verfahrensschritte beim Lösen einer Fahrkarte. Zwei Zeitstrahlen 50 bzw. 52 zeigen Vorgänge, die unter Einbeziehung des Fahrkartenrechners 10 bzw. unter Einbeziehung des Handys 14 ausgeführt werden. Spätere Zeitpunkte t sind auf den Zeitstrahlen 50 und 52 weiter unten abgetragen als frühere Zeitpunkte t.

Zu einem Zeitpunkt t0 gibt der Fahrgast über die Tastatur 18 seines Handys 14 die Fahrtdaten ein. Es sei angenommen, dass er eine Tageskarte kaufen möchte. Die Darstellung eines Auswahlmenüs in der Anzeigeeinheit 20 wird vom Fahrkartenrechner 10 aus veranlasst (nicht dargestellt).

Zu einem Zeitpunkt t2 werden die Fahrtdaten vom Handy 14 über die Bluetooth-Schnittstellen 30 und 12 zum Fahrkartenrechner 10 übertragen. Im Fahrkartenrechner 10 wird ein zu den Fahrtdaten gehörender Fahrpreis berechnet. Zu einem Zeitpunkt t4 wird ein Bezahlvorgang zwischen dem Fahrkartenrechner 10 und dem Handy 14 ausgeführt. Dabei wird ein in der Chipkarte 22 gespeicherter Geldbetrag nachweisbar um den Fahrpreis vermindert. Die Chipkarte 22 erzeugt bspw. mit Hilfe eines internen privaten digitalen Schlüssels eine elektronische Unterschrift unter die folgenden Daten: aktuelles Datum, aktuelle Uhrzeit, alter Geldbetrag, neuer Geldbetrag sowie eine Zufallszahl. Die Daten werden gemeinsam mit der Unterschrift zum Fahrkartenrechner 10 übertragen.

Mit Hilfe eines zum privaten Schlüssel gehörenden öffentlichen digitalen Schlüssel werden die übertragenen Daten geprüft. Dabei werden bspw. die aus der Kryptografie bekannten asymmetrischen Verfahren eingesetzt, z.B. das RSA-Verfahren (Rivest, Shamir und Adleman). Der öffentliche Schlüssel ist normalerweise bei einer sogenannten "Trusted Third Party" einer Schlüssel-Infrastruktur gespeichert und kann dort z.B. über das Internet angefordert werden. Ist die Unterschrift echt, so ist sichergestellt, dass tatsächlich die Chipkarte 22 des Fahrgastes beteiligt ist und dass die Daten stimmen, insbesondere dass sich der Geldbetrag verringert hat.

Zu einem Zeitpunkt t6 erzeugt der Fahrkartenrechner 10 eine Bestätigungsnachricht, die über die beiden Bluetooth-Schnittstellen 12 und 30 zum Handy 14 übertragen und dort in der Chipkarte für spätere Kontrollzwecke gespeichert wird. Bei einem ersten Ausführungsbeispiel enthalten die Bestätigungsdaten die Fahrtdaten unterschrieben mit einem privaten digitalen Schlüssel des Diensterbringungsrechners 10. Der Fahrkartenrechner 10 lässt sich beim ersten Ausführungsbeispiel unabhängig von einem zentralen Diensterbringungsrechner 34 betreiben. Jedoch ist es zweckmäßig, die Fahrtdaten beispielsweise für eine statistische Auswertung zu dem zentralen Diensterbringungsrechner 34 zu übertragen, siehe Zeitpunkt t8.

Ist der auf der Chipkarte 22 gespeicherte Geldbetrag ausgegeben, so lässt sich der Geldbetrag durch den Aufbau einer Mobilfunkverbindung zum Zahlungsrechner 36 und ein anschließend ausgeführtes Aufladverfahren wieder erhöhen, siehe Zeitpunkt t10.

Gehört der Zahlungsrechner 36 nicht dem Betreiber der U-Bahn, so wird der Zahlungstransfer zwischen dem Betreiber des Zahlungsrechners 36 und dem Betreiber der U-Bahn mit Hilfe der beim Bezahlvorgang t4 übermittelten Daten ausgeführt.

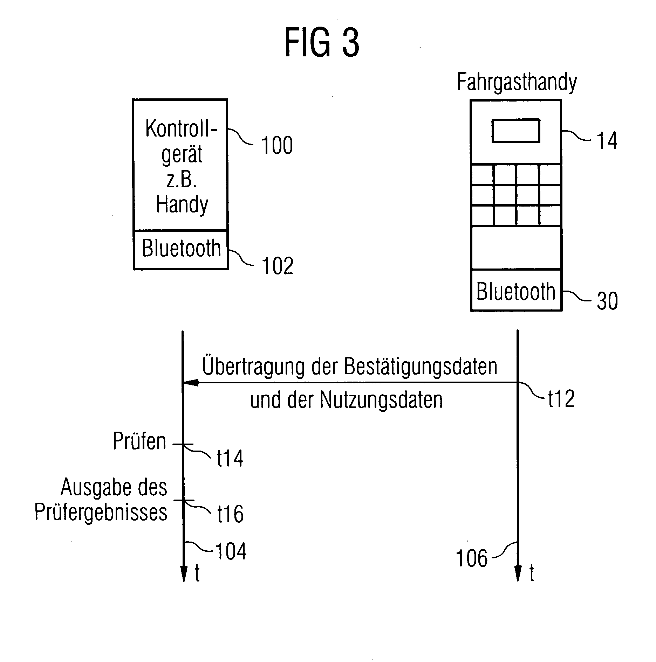

Figur 3 zeigt Verfahrensschritte beim Kontrollieren einer elektronischen Fahrkarte ohne Einbeziehung des Mobilfunknetzes 16. Eine Kontrollperson nutzt dabei ein Kontrollgerät 100, das eine Bluetooth-Schnittstelle 102 hat. Das Kontrollgerät 100 ist beispielsweise ein Handy, das um Kontrollfunktionen erweitert worden ist. Vorgänge, die unter Einbeziehung des Kontrollgerätes 100 stattfinden, sind in Figur 3 auf einem Zeitstrahl 104 dargestellt. Vorgänge, die unter Einbeziehung des Handys 14 ausgeführt werden, sind auf einem Zeitstrahl 106 dargestellt.

Die Kontrollperson fordert den Fahrgast auf, die zum Zeitpunkt t6 empfangenen Bestätigungsdaten von seinem Handy 14 zum Kontrollgerät 100 zu übertragen. Zu einem Zeitpunkt t12 wird die Übertragung der Bestätigungsdaten über die Bluetooth-Schnittstellen 30 und 102 ausgeführt. Die Bestätigungsdaten enthalten die Fahrtdaten, so dass die Kontrollperson zu einem Zeitpunkt t14 überprüfen kann, ob der Fahrgast zur Nutzung des Verkehrsmittels berechtigt ist. Zur Prüfung wird auch die Unterschrift unter die Fahrtdaten mit Hilfe eines digitalen öffentlichen Schlüssels des Betreibers der U-Bahn geprüft. Bei der Prüfung wird die Kontrollperson ggf. den Kontrollort und die Kontrollzeit berücksichtigen. Ist der Kontrollort fest vorgegeben, so lässt er sich in das Kontrollgerät 100 eingeben. In diesem Fall kann die zum Zeitpunkt t14 durchzuführende Prüfung vollautomatisch ausgeführt werden. Zu einem Zeitpunkt t16 wird ein automatisch ermitteltes Prüfergebnis auf einer Anzeige des Kontrollgerätes 100 ausgegeben. Alternativ kommt die Kontrollperson zum Zeitpunkt t16 selbst zu einem Prüfergebnis. Abhängig vom Prüfergebnis kann der Fahrgast bei gültiger elektronischer Fahrkarte seine Fahrt ungehindert fortsetzen. Ist dagegen seine elektronische Fahrkarte nicht gültig oder hat der Fahrgast keine elektronische Fahrkarte und auch keine andere gültige Fahrkarte, so werden Nachzahlungen fällig.

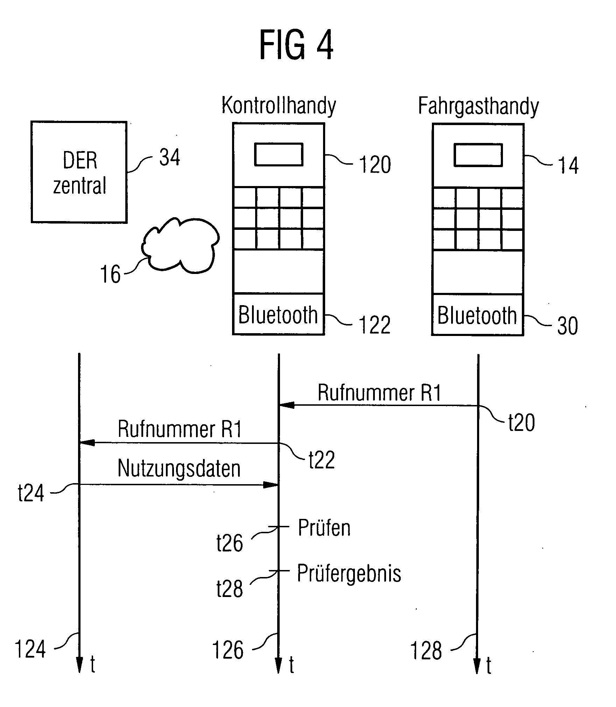

Figur 4 zeigt Verfahrenschritte beim Kontrollieren der elektronischen Fahrkarte unter Einbeziehung des Mobilfunknetzes 16. Das an Hand der Figur 4 erläuterte Kontrollverfahren setzt nicht voraus, dass im Fahrgasthandy 14 Bestätigungsdaten gespeichert sind. Jedoch müssen die Fahrtdaten vom Fahrkartenrechner 10 zum zentralen Diensterbringungsrechner 34 übertragen werden, siehe Figur 2, Zeitpunkt t8.

Die Kontrollperson nutzt zur Durchführung des an Hand der Figur 4 erläuterten Kontrollverfahrens ein Kontrollhandy 120, das neben den Funktionen eines üblichen Handys um Funktionen für die Kontrolle erweitert worden ist. Das Kontrollhandy 120 hat außerdem eine Bluetooth-Schnittstelle 122.

In Figur 4 sind Vorgänge, die sich auf den zentralen Diensterbringungsrechner 34, auf das Kontrollhandy 122 bzw. auf das Fahrgasthandy 14 beziehen, mit Hilfe dreier Zeitstrahlen 124, 126 bzw. 128 dargestellt.

Die Kontrollperson fordert den Fahrgast auf, seine Handynummer an das Kontrollhandy 120 zu übermitteln. Zu einem Zeitpunkt t20 wird die Rufnummer R1 des Handys 14 über die Bluetooth-Schnittstellen 30 und 122 zum Kontrollhandy 120 übertragen. Zu einem folgenden Zeitpunkt t22 wird die Rufnummer R1 über die Mobilfunkschnittstelle des Kontrollhandys 120 unter Nutzung des Mobilfunknetzes 16 zum zentralen Diensterbringungsrechner 34 übertragen.

Zu einem Zeitpunkt t24 werden die zur Rufnummer R1 gespeicherten Fahrtdaten gelesen und vom Diensterbringungsrechner 34 über das Mobilfunknetz 16 zum Kontrollhandy 120 übermittelt. Die Kontrollperson prüft zu einem Zeitpunkt t26 an Hand der übermittelten Fahrtdaten, ob der Fahrgast zur Nutzung des Transportmittels berechtigt ist. Zu einem Zeitpunkt t28 liegt das Prüfergebnis vor. Abhängig vom Prüfergebnis kann der Fahrgast seine Fahrt ungehindert fortsetzen oder es wird eine Nachzahlung fällig. Ist der Standort des Kontrollhandys 120 im Kontrollhandy bekannt, so lassen sich die Prüfschritte für den Zeitpunkt t26 und t28 automatisch ausführen.

Bei anderen Ausführungsbeispielen werden Fahrkartenrechner 10 eingesetzt, an die mehrere Bluetooth-Schnittstellen angeschlossen sind, z.B. zehn Schnittstellen. Über diese Schnittstellen können mehrere Fahrgäste gleichzeitig ihre Fahrkarten lösen. Die einzelnen Bluetooth-Schnittstellen lassen sich über ein lokales Datenübertragungsnetz mit dem Fahrkartenrechner verbinden, siehe gestrichelte Linien 130 in Figur 1.

Bei einem nächsten Ausführungsbeispiel werden die Funktionen des zentralen Diensterbringungsrechners 34 und des Zahlungsrechners 36 durch einen einzelnen Rechner erbracht, der dem Betreiber der U-Bahn gehört.

Bei einem anderen Ausführungsbeispiel kann der Fahrgast beim Lösen der Fahrkarte wählen, ob er die Bluetooth-Schnittstelle 30 oder die Mobilfunkschnittstelle 28 zum Lösen der Fahrkarte benutzen möchte.

An Stelle der manuellen Eingabe der Fahrtdaten zum Zeitpunkt t0, Figur 2, werden die Fahrtdaten bei einem weiteren Ausführungsbeispiel im Fahrgasthandy gespeichert und lediglich gelesen. Im Handy 14 werden also persönliche, häufig benutzte Fahrtdaten gespeichert. Durch diese Maßnahme vereinfacht sich die Eingabe der Fahrtdaten erheblich, da einmal eingegebene Fahrtdaten mehrmals genutzt werden können.

Die Eingabe der Fahrtdaten lässt sich aber auch dadurch erleichtern, dass Tastenvorbelegungen mit Standardfahrten vorgesehen sind, z.B. die Taste 1 für einfache Fahrt/ Erwachsener/ Innenstadt, die Taste 2 für Hin- und Rückfahrt/ Erwachsener/ Innenstadt, die Taste 3 für Tageskarte, die Taste 4 für Familienkarte usw.

## Patentansprüche

**1.** Verfahren zum elektronischen Bezahlen der Nutzung eines Transportmittels,
bei dem ein Endgerät (14) eines Mobilfunk-Datenübertragungsnetzes (16) eingesetzt wird,
das Endgerät eine Mobilfunkschnittstelle (28) und eine lokale Schnittstelle (30) zur lokalen Datenübertragung enthält,
zwischen dem Endgerät (14) und einem Diensterbringungsrechner (10) über die lokale Schnittstelle (30) eine Nah-Datenübertragungsverbindung (32) aufgebaut wird,
über die Nah-Datenübertragungsverbindung (32) vom Endgerät (14) zum Diensterbringungsrechner (10) Nutzungsdaten übertragen werden, welche die geplante Nutzung des Transportmittels durch den Nutzer des Endgerätes (14) angeben,
und bei dem mit Hilfe eines elektronischen Bezahlverfahrens unter Nutzung der lokalen Schnittstelle (30) die Nutzung des Transportmittels bezahlt wird.

**2.** Verfahren nach Anspruch 1, **dadurch gekennzeichnet, dass** dem Endgerät (14) eine Rufnummer (R1) zugeordnet ist, unter der es für andere Endgeräte erreichbar ist,
die Rufnummer (R1) des Endgerätes (14) über die Nah-Datenübertragungsverbindung übertragen und gemeinsam mit den Nutzungsdaten in einer zentralen Speichereinheit gespeichert wird.

**3.** Verfahren nach Anspruch 2, **dadurch gekennzeichnet, dass** eine Kontroll-Datenübertragungsverbindung zwischen einem Kontrollgerät (120) und dem Endgerät (14) über die lokale Schnittstelle (30) aufgebaut wird,
dass die Rufnummer (R1) des Endgerätes (14) über die Kontroll-Datenübertragungsverbindung zum Kontrollgerät (120) übertragen wird (t20),
dass eine Fern-Datenübertragungsverbindung zwischen dem Kontrollgerät (120) und einem Diensterbringungsrechner (34) mit Zugriff auf die zentrale Speichereinheit aufgebaut wird,
dass die Rufnummer (R1) des Endgerätes (14) über die Fern-Datenübertragungsverbindung zum Diensterbringungsrechner (34) übermittelt wird (t22),
dass im Diensterbringungsrechner (34) die zur Rufnummer (R1) gespeicherten Nutzungsdaten aus der zentralen Speichereinheit gelesen werden,
und dass an Hand der gelesenen Nutzungsdaten die Berechtigung zur tatsächlichen Nutzung des Verkehrsmittels überprüft wird (t26).

**4.** Verfahren nach Anspruch 1, **dadurch gekennzeichnet, dass** über die Nah-Datenübertragungsverbindung (32) vom Diensterbringungsrechner (10) einen Nachweis über das elektronische Bezahlverfahren enthaltende Nachweisdaten übertragen (t6) und im Endgerät (14) gespeichert werden.

**5.** Verfahren nach Anspruch 4, **dadurch gekennzeichnet, dass** eine Kontroll-Datenübertragungsverbindung zwischen dem Endgerät (14) und einem Kontrollgerät (100) über die lokale Schnittstelle (30) aufgebaut wird,
dass die Nachweisdaten vom Endgerät (14) zum Kontrollgerät (100) über die lokale Schnittstelle (30) übertragen werden, und dass an Hand der Nachweisdaten die Berechtigung zur tatsächlichen Nutzung des Transportmittels geprüft wird.

**6.** Verfahren nach Anspruch 4 oder 5, **dadurch gekennzeichnet, dass** die Nachweisdaten die Nutzungsdaten enthalten.

**7.** Verfahren nach einem der vorhergehenden Ansprüche, **dadurch gekennzeichnet, dass** die Nutzungsdaten einen Einstiegsort und/oder einen Ausstiegsort und/oder die Anzahl von Mitfahrern und/oder eine Anzahl von Tarifzonen angeben.

**8.** Verfahren nach einem der vorhergehenden Ansprüche, **dadurch gekennzeichnet, dass** die Nutzungsdaten und/oder die Nachweisdaten elektronisch verschlüsselt und/oder elektronisch unterschrieben werden.

**9.** Verfahren nach einem der vorhergehenden Ansprüche, **dadurch gekennzeichnet, dass** die lokale Schnittstelle (30) eine Schnittstelle kurzer Datenübertragungsreichweite ist und/oder dass die Reichweite im Bereich von etwa einem Meter bis etwa zehn Meter liegt,
und/oder dass die lokale Schnittstelle (30) eine Funkschnittstelle oder eine optisch arbeitende Schnittstelle ist,
und/oder dass die lokale Schnittstelle (30) eine Schnittstelle ist, die gemäß Bluetooth-Standard oder gemäß einem auf dem Bluetooth-Standard aufbauendem Standard arbeitet.

**10.** Verfahren nach einem der vorhergehenden Ansprüche, **dadurch gekennzeichnet, dass** die Datenübertragungsverbindungen nach dem manuellen Eingeben eines Startsignals automatisch aufgebaut werden,
und/oder dass die Daten nach der Eingabe eines manuellen Startsignals automatisch übertragen werden.

**11.** Verfahren nach einem der vorhergehenden Ansprüche, **dadurch gekennzeichnet, dass** das Bezahlverfahren ein Verfahren mit Vorauszahlung oder ein Verfahren mit Kredit oder ein Verfahren ist, bei dem ein in einer Speicherkarte (22) des Endgerätes (14) gespeicherter Geldbetrag verringert wird,
und/oder dass im Rahmen des Bezahlverfahrens die Rufnummer (R1) des Endgerätes (14) oder ein anderes Kennzeichen des Nutzers des Endgerätes zur Identifizierung eingesetzt wird.

**12.** Verfahren nach einem der vorhergehenden Ansprüche, **dadurch gekennzeichnet, dass** abhängig von einem Auswahldatum die Nutzungsdaten wahlweise über die lokale Schnittstelle (30) oder über die Mobilfunkschnittstelle (28) zum Diensterbringungsrechner (10, 34) übertragen werden.

**13.** Endgerät (14),
mit einer Mobilfunkschnittstelle (28),
mit einer lokalen Schnittstelle (30),
und mit einer Steuereinheit,
**dadurch gekennzeichnet, dass** die Steuereinheit so aufgebaut ist, dass beim Betrieb des Endgerätes (14) die auf das Endgerät (14) bezogenen Verfahrensschritte nach einem der vorhergehenden Ansprüche ausführbar sind.

**14.** Kontrollgerät (100, 120),
mit einer lokalen Schnittstelle (102, 122),
und mit einer Steuereinheit,
**dadurch gekennzeichnet, dass** die Steuereinheit so aufgebaut ist, dass beim Betrieb des Kontrollgerätes (100, 120) die auf das Kontrollgerät (100, 120) bezogenen Verfahrensschritte nach einem der Ansprüche 2 bis 12 ausführbar sind.

**14.** Diensterbringungsrechner (10),
mit einer Steuereinheit,
**dadurch gekennzeichnet, dass** beim Betrieb des Diensterbringungsrechners (10) die auf den Diensterbringungsrechner (10) bezogenen Verfahrensschritte nach einem der Ansprüche 1 bis 12 ausgeführt werden.
